# EUROPÄISCHE PATENTSCHRIFT

(11) **EP 0 659 633 B1**
(45) Veröffentlichungstag und Bekanntmachung des Hinweises auf die Patenterteilung: **23.04.1997**
(21) Anmeldenummer: 94119871.5
(22) Anmeldetag: 15.12.1994
(51) Int. Cl.: B62D 53/06

(54) **Satteltiefladeanhänger**
Low bed semi-trailer
Semi-remorque surbaissée

(30) Priorität: 21.12.1993 DE 4343697
(43) Veröffentlichungstag der Anmeldung: 28.06.1995
(73) Patentinhaber: Goldhofer Fahrzeugwerk GmbH & Co., D-87700 Memmingen (DE)
(72) Erfinder: Botzenhart, Alfred, D-87781 Ungerhausen (DE)
(74) Vertreter: Lemke, Jörg-Michael, Dipl.-Ing.

(56) Entgegenhaltungen:
- FR-A- 1 179 289

## Beschreibung

Die Erfindung betrifft einen Satteltiefladeanhänger mit einer zwischen einem hinteren, mehrachsigen Fahrwerk und einer zweckmäßig als Sattel-Schwanenhals ausgebildeten Zuggabel oder Daichsel tiefer gesetzten Tiefladebrücke mit einer Ladefläche.

Derartige Satteltiefladeanhänger sind bekannt und werden für den Transport von Schwerlasten verwendet, wie Raupenfahrzeuge (z.B. Planierraupen, Bagger, senkrechtstehende Betonwandelemente u.s.w.).

Bei einem solchen Satteltiefladeanhänger mit Tiefbettladefläche und vier Achsen hinten ist aus Schwerpunktgründen einerseits und aus Zulassungsgründen andererseits eine Vierachs-Schwerlast-Zugmaschine erforderlich. Dadurch will man erreichen, daß sämtliche Achsen des Satteltiefladezuges relativ gleichmäßig belastet werden.

Eine Vierachs-Schwerlast-Zugmaschine ist wirtschaftlich gesehen, also bezüglich Anschaffung und Unterhalt, natürlich wesentlich aufwendiger als eine Dreiachs-Schwerlast-Zugmaschine, die aufgrund ihrer Leistung an sich durchaus in der Lage wäre, auch einen Satteltiefladeanhänger mit vier Achsen zu ziehen, da dies ja im wesentlichen nur von der Stärke ihres Motors abhängt.

Die der Erfindung zugrundeliegende Aufgabe wird deshalb darin gesehen, einen Satteltiefladeanhänger der eingangs genannten Bauart zu schaffen, der schwerpunktsmäßig und zulassungstechnisch von einer Schwerlastzugmaschine gezogen werden kann und darf, die weniger Achsen aufweist als der Satteltiefladeanhänger selber.

Diese Aufgabe wird erfindungsgemäß dadurch gelöst, daß zumindest die erste der zum Schwanenhals hin angeordneten Achsen kürzer als die übrigen, übliche Achsbreite aufweisenden, Achsen ausgebildet ist, derart daß die Räder dieser verkürzten Achse(n) symmetrisch zur Längsmittelachse der Tiefladebrücke hin versetzt sind und dadurch eine schmalere Sour als die Räder der übrigen Achsen aufweisen, und daß die Ladefläche gabelförmig zu beiden Seiten der Räder dieser verkürzten Achse(n) in den Bereich des Fahrwerks hinein nach hinten verlängert ist.

Diese Verlängerung der Tiefladebrücke nach hinten, in den Bereich des Fahrwerks hinein, wird eben durch das Zusammenrücken der beiden Räder der ersten Achse oder gegebenenfalls auch zusätzlich der beiden Räder der zweiten Achse möglich. Das Ziel dabei ist, eine Möglichkeit zu schaffen, die zu transportierenden Lasten in Richtung auf das Fahrwerk des Anhängers hin zu verlagern, derart, daß eben ein größerer Teil dieser Last auf den Achsen des Fahrwerks des Satteltiefladeanhängers aufruht, während nur der kleinere Teil der Last den Achsen der Schwerlast-Zugmaschine zuzuordnen ist. Hierdurch läßt sich erreichen, daß beispielsweise ein vierachsiger Satteltiefladeanhänger von einer dreiachsigen Schwerlast-Zugmaschine gezogen werden kann und darf, da ja für eine gleichmäßige Verteilung der Last auf sämtliche Achsen gesorgt werden kann.

Ob es sich bei der Last nun um Betonwandelemente oder um Ketten- bzw. Raupenfahrzeuge handelt, sie lassen sich auf der Tiefladebrücke in den Bereich der ersten, dem Schwanenhals zugewandten Achse des Fahrwerks eines Satteltiefladeanhängers hinein verlagern, wenn nur diese Achse kürzer zur Bildung einer schmalerern Spur ausgebildet ist, so daß sich die Tiefladebrücke seitlich an der Achse und damit jeweils den beiden Rädern derselben vorbei gabelförmig nach hinten erstrecken kann. Im Falle eines vierachsigen Satteltiefladeanhängers und einer dreiachsigen Schwerlast-Zugmaschine bewirkt diese Verlagerung, daß praktisch vier Siebtel der Last dem Fahrwerk des Anhängers zuzuordnen sind, während lediglich drei Siebtel für die dreiachsige Schwerlast -Zugmaschine verbleiben, womit infolge der gleichmäßigen Verteilung der Achslasten eine Ausnahmegenehmigung der Zulassungsbehörde auf Dauer dahingehend erreicht werden kann, daß auf eine Vierachs-Schwerlast-Zugmaschine verzichtet und eine Dreiachs-Schwerlast-Zugmaschine verwendet werden darf, um den vierachsigen Satteltiefladeanhänger unter Last zu bewegen.

Es versteht sich, daß sich die Erfindung nicht hierauf beschränkt; es ist vielmehr auch möglich, beispielsweise bei einem Vierachs-Satteltiefladeanhänger die beiden ersten, der Vorderseite bzw. dem Schwanenhals des Satteltiefladeanhängers zugeordneten Achsen in der erfindungsgemäßen Weise schmaler zu gestalten, so daß die gabelförmigen Seitenteile sich entsprechend weit, praktisch bis zur Hälfte des vierachsigen Fahrwerks eines solchen Anhängers, erstrecken, womit letztlich dieses Fahrwerk zwei Drittel der zu transportierenden Last aufnehmen kann und lediglich ein Drittel derselben für die Schwerlast-Zugmaschine verbleiben, was praktisch die Möglichkeit schaffen würde, solche mit lediglich zwei Achsen zu verwenden. Im allgemeinen wird man jedoch bei dreiachsigen Schwerlast-Zugmaschinen bleiben, auch dann, wenn die Ausbildung des Satteltiefladeanhängers es erlauben würde, in der aufgezeigten Weise zu arbeiten. Zweck dieser Darlegung ist in erster Linie die Verdeutlichung der Tatsache, daß der Erfindungsgedanke nicht auf die zur Längsachse des Anhängers symmetrische Verkürzung bzw. Spurverschmälerung von lediglich einer Achse des Fahrwerks eines Satteltiefladeanhängers beschränkt ist.

Da die Tiefladebrücke definitions- und konstruktionsbedingt etwa in der Höhe der Radachsen zu liegen pflegt, die erfindungsgemäßen seitlichen, gabelförmigen Verlängerungen somit bei einem erforderlichen Radwechsel an den verkürzten Achsen im Wege stehen würden, sind diese Verlängerungen vorteilhaft mittels Bolzenkupplungen oder auch Scharnieren an der Tiefladebrücke befestigt, derart, daß sie entfernbar oder hochklappbar sind und damit kein Hindernis mehr für einen solchen Radwechsel bilden können.

Es versteht sich, daß diese Ausgestaltungen dann nicht mehr erforderlich sind, wenn das Beladen der Tiefladebrücke mit Kettenfahrzeugen oder dergleichen von hinten her über abklappbare Auffahrrampen erfolgt, wobei dann nämlich ein hydraulisches Anheben der Ladefläche der Tiefladebrücke in ihrem hinteren Bereich ermöglicht wird, derart, daß die Kettenfahrzeuge über das Fahrgestell des Anhängers hinweg auf die Ladefläche fahren können, die anschließend wieder herabgelassen werden.

Die aufgezeigten Ausgestaltungen der Verlängerungen hinsichtlich Entfernbarkeit bzw. Hochklappbarkeit sind nur dort erforderlich, wo in ebenfalls bekannter Weise ein hydraulisches Absenken des vorderen Endes der Tiefladebrücke am Schwanenhals erfolgt, der anschließend gelöst und entfernt werden kann, so daß die Kettenfahrzeuge von vorn auf die Ladefläche und deren Verlängerungen hinauffahren können.

Die Erfindung ist im folgenden anhand eines in der Zeichnung dargestellten Ausführungsbeispiels näher erläutert.

Es zeigt:
Figur 1 einen erfindungsgemäßen Satteltiefladeanhänger in Seitenansicht;
Figur 2 den Satteltiefladeanhänger nach Figur 1 in Draufsicht.

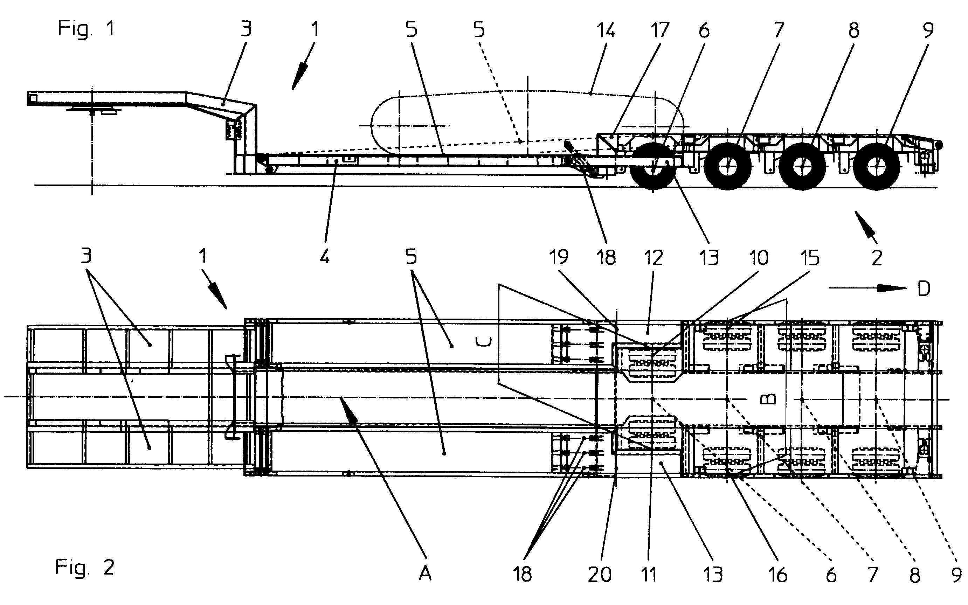

Ein Satteltiefladeanhänger 1 besitzt eine zwischen dem hinteren, mehrachsigen, im vorliegenden Fall vierachsigen Fahrwerk 2 und einer als Sattel-Schwanenhals 3 ausgebildeten Deichsel eine tiefer gesetzte Tiefladebrücke 4 mit einer Ladefläche 5. Erfindungsgemäß ist nun bei der gezeigten Ausführungsform die erste der zum Schwanenhals 3 hin angeordneten Achsen 6, 7, 8, 9 kürzer als die übrigen, also die Achse 6 kürzer als die Achsen 7, 8 und 9, welchletztere eine übliche Achsbreite B aufweisen (Fig. 2), ausgebildet. Die Räder 10 und 11 dieser Achse 6 sind symmetrisch zur Längsmittelachse A (Fig. 2) der Tiefladebrücke 4 hin versetzt, so daß sich durch eine kürzere Achsbreite C eine schmalere Spur ergibt. Dabei ist erfindungsgemäß die Ladefläche 5, die besonders deutlich aus Figur 2 zu entnehmen ist, gabelförmig an beiden Seiten über die Räder 10 und 11 dieser verkürzten Achse 6 hinaus nach hinten, das heißt in Pfeilrichtung D, verlängert. Diese Verlängerungen 12 und 13 ermöglichen natürlich die Verlagerung von zu transportierenden Lasten ebenfalls in Pfeilrichtung D nach hinten, wie dies in Figur 1 mit der die Seitenansicht der Kette eines Raupenfahrzeugs andeutenden Linie 14 gezeigt ist, derart, daß die Aufhängung der verkürzten Achse 6 zwischen den Ketten des Fahrwerks des im einzelnen nicht gezeigten Raupenfahrzeugs Platz findet.

Wie bereits eingangs bemerkt, läßt sich natürlich auch zum Beispiel die Achse 7 entsprechend der Achse 6 ausbilden, das heißt ebenfalls verkürzen, so daß sich dann die Verlängerungen 12 und 13 noch weiter nach hinten, an den Rädern 15 und 16 vorbei, erstrecken würden, was eine noch weitere Verlagerung von Lasten auf dem Fahrwerk 2 des Satteltiefladeanhängers 1 nach hinten ermöglichen würde.

Bei der gezeigten Ausführungsform ist der hintere Bereich der Ladefläche 5, wie bei 17 in Fig. 1 gestrichelt angedeutet, hydraulisch mittels der Kolben-Zylinder-Einheiten 18 anhebbar, um von hinten her über nicht gezeigte Auffahrrampen ein Beladen der Tiefladebrücke über das Fahrwerk 2 hinweg zu ermöglichen. Nach dem Beladevorgang wird die Ladefläche 5 wieder abgesenkt. Sollte ein solches Anheben und Absenken des hinteren Endes der Ladefläche 5 in der erläuterten Weise nicht möglich sein, erfolgt vielmehr, wie eingangs geschildert, das Beladen durch Absenken des vorderen Endes der Ladefläche 5 und durch Entfernen des Schwanenhalses 3, dann muß eine Lösbarkeit bzw. Entfernbarkeit oder eine Hochklappbarkeit der Verlängerungen 12 und 13 vorgesehen sein, um ein Auswechseln der Räder 10 und 11 zu ermöglichen. Dies kann dadurch bewerkstelligt werden, daß die Verlängerungen 12 und 13 mittels nicht gezeigter Bolzenkupplungen an der Tiefladebrücke 4 befestigt werden, oder auch dadurch, daß die Verlängerungen 12, 13 mittels nicht gezeigter Scharniere an der Tiefladebrücke 4 hochklappbar sind, wobei die nicht gezeigten Scharniere längs der Linien 19 und 20 an der Tiefladebrücke 4 angeordnet werden können. Im wesentlichen senkrecht auf der Tiefladebrücke 4 anzuordnende Betonwandelemente benötigen natürlich überhaupt keine absenk- oder anhebbare Ladefläche, da sie mit Hilfe eines Krans auf- und abgeladen werden.

## Patentansprüche

1. Satteltiefladeanhänger (1) mit einer zwischen einem hinteren, mehrachsigen Fahrwerk (2) und einer zweckmäßig als Sattel-Schwanenhals (3) oder Zuggabel ausgebildeten Deichsel tiefer gesetzten Tiefladebrücke (4) mit einer Ladefläche (5), dadurch gekennzeichnet, daß zumindest die erste der zum Schwanenhals (3) hin angeordneten Achsen (6,7,8,9) kürzer als die übrigen, übliche Achsbreite aufweisenden, Achsen ausgebildet ist, derart, daß die Räder (10,11) dieser Achse(n) (6) symmetrisch zur Längsmittelachse (A) der Tiefladebrücke (4) hin versetzt sind und dadurch eine schmalere Spur als die Räder (15,16) der übrigen Achsen aufweisen, und daß die Ladefläche (5) gabelförmig zu beiden Seiten der Räder (10,11) dieser verkürzten Achse(n) nach hinten (Pfeil D) in den Bereich des Fahrwerks hinein verlängert ist.

2. Satteltiefladeanhänger nach Anspruch 1 mit einem hinteren vierachsigen Fahrwerk, dadurch gekennzeichnet, daß sich Verlängerungen (12,13) der Ladefläche (5) nach hinten praktisch bis zur Hälfte des Fahrwerks (2) erstrecken.

3. Satteltiefladeanhänger nach Anspruch 1 oder 2 mit einem hydraulisch betätigten Sattel-Schwanenhals (3) zum Absenken des vorderen Endes der Tiefladebrücke (4) auf den Boden zwecks Wegfahrens des Schwanenhalses und Beladung von vorne, dadurch gekennzeichnet, daß die über die verkürzte bzw. verkürzten Achse(n) (6) hinausragenden Verlängerungen (12,13) der Ladefläche (5) zwecks Radwechsel entfernbar oder hochklappbar sind.

4. Satteltiefladeanhänger nach Anspruch 3, dadurch gekennzeichnet, daß die Verlängerungen (12,13) mittels Bolzenkupplungen an der Tiefladebrücke (4) befestigt sind.

5. Satteltiefladeanhänger nach Anspruch 3, dadurch gekennzeichnet, daß die Verlängerungen (12,13) mittels Scharnieren an der Tiefladebrücke (4) hochklappbar sind.

## Claims

1. Low bed semi-trailer (1) having a low bed bridge (4) which is positioned low between a rear multi-axle running gear (2) and a drawbar which purposely is formed as a gooseneck bracket or a forked drawbar, said low bed bridge (4) having a loading floor (5), **characterized** in that at least the first of those axles (6, 7, 8, 9) which are arranged towards the gooseneck (3) is shorter than the rest of the axles having usual axle width, such that the wheels (10, 11) of this axle (6) or these axles are offset symmetrically towards the longitudinal central axis (A) of the low bed bridge (4) and, therefore, show a narrower track than the wheels (15, 16) of the rest of the axles, and in that the loading floor is fork-shaped and is extended at both sides of the wheels (10, 11) of the said shortened axle(s) towards the rear (arrow D) into the region of the running gear.

2. Low bed semi-trailer according to claim 1 with a rear four-axle running gear, **characterized** in that extensions (12, 13) of the loading floor (5) extend towards the rear practically up to one half of the running gear (2).

3. Low bed semi-trailer according to claim 1 or 2 having a hydraulically actuated gooseneck bracket (3) for lowering the forward end of the low bed bridge (4) to the ground for removing the gooseneck and loading from the front, **characterized** in that the extensions (12, 13) of the loading floor (5) projecting beyond the shortened axle (6) or axles can be removed or folded upwardly for wheel exchange.

4. Low bed semi-trailer according to claim 3, **characterized** in that the extensions (12, 13) are attached to the low bed bridge (4) by means of bolt couplings.

5. Low bed semi-trailer according to claim 3, **characterized** in that the extensions (12, 13) can be folded upwardly by means of hinges at the low bed bridge (4).

## Revendications

1. Semi-remorque surbaissée (1) avec une plate-forme de chargement surbaissée (4) ayant une surface de chargement (5) et disposée plus basse entre un train roulant (2) arrière à plusieurs essieux et un timon réalisé de façon appropriée comme un col de cygne de sellette (3) ou fourche de traction, caractérisée en ce qu'au moins le premier des essieux ( 6, 7, 8, 9) disposé en partant du col de cygne (3), est réalisé plus court que les autres essieux présentant des écartements usuels, de façon à ce que les roues (10, 11) de ce ou ces essieu(x) (6) soient décalées symétriquement par rapport à l'axe milieu longitudinal (A) de la plate-forme de chargement surbaissée (4) et présentent en conséquence un plus petit écartement que les roues (15, 16) des autres essieux, et en ce que la surface de chargement (5) est rallongée vers l'intérieur, en forme de fourchette, des deux côtés des roues (10, 11) de ces essieux raccourcis, vers l'arrière (Flèche D) dans la région du train roulant.

2. Semi-remorque surbaissée selon la revendication 1, avec un train roulant arrière à quatre essieux, caractérisée en ce que les rallongements (12 ,13) de la surface de chargement (5) s'étendent vers l'arrière pratiquement jusqu'à la moitié du train roulant (2).

3. Semi-remorque surbaissée selon la revendication 1 ou 2, avec un col de cygne pour sellette (3) actionné hydrauliquement pour abaisser l'extrémité avant de la plate-forme de chargement surbaissée (4) vers le sol pour l'enlèvement et le chargement par l'avant, caractérisée en ce que les rallongements (12, 13) de la surface de chargement (5) faisant saillie au-dessus de l'essieu raccourci, respectivement des essieux raccourcis (6), peuvent être enlevés ou repliés vers le haut pour pouvoir changer les roues.

4. Semi-remorque surbaissée selon la revendication 3, caractérisée en ce que les rallongements (12, 13) sont fixés à la plate-forme de chargement surbaissée (4) à l'aide d'accouplements à boulons.

5. Semi-remorque surbaissée selon la revendication 3, caractérisée en ce que les rallongements (12, 13) peuvent être repliés vers le haut grâce à des charnières sur la plate-forme de chargement surbaissée (4).
